# EUROPEAN PATENT APPLICATION

(11) **EP 3 492 340 A1**
(43) Date of publication of application: **05.06.2019**
(21) Application number: 18209901.0
(22) Date of filing: 03.12.2018
(51) Int. Cl.: B62B 1/14, B62B 1/12

(54) **TROLLEY**

(30) Priority: 04.12.2017 GB 201720146
(71) Applicant: Day, Paul, Bristol BS13 0NJ (GB)
(72) Inventor: Day, Paul, Bristol BS13 0NJ (GB)
(74) Representative: Marles, Alan David

(57) **Abstract**

There is provided a trolley 1 having a back member 10 with wheels 14 at a lower end and a handle 16 at an upper end. Between the ends there is a cavity engaging means 18 for engaging the cavity of an appliance such as a washing machine, the means 18 being movable in both vertical and horizontal directions relative to the back member. There is also a base engaging means for engaging the appliance from below. Preferably the base engaging means can be moved into tight engagement with the underside of the appliance and retained in that position.

## Description

This invention relates to a trolley for moving domestic appliances. In some embodiments the trolley can be stored in a folded or dismantled state and unfolded or assembled *in situ* by the user when use of the trolley is required.

Trolleys and sack trucks for moving domestic appliances are known, and generally comprise a tubular metal frame having wheels at one end and a handle at the opposite end, and a sack receiving tray attached to the frame. Generally, in the upright, in-use, position the handle will be at the upper end and the wheels and sack receiving tray will be at the lower end, the wheels being located on the rear and the receiving tray on the front of the frame.

However, to maintain the strength and rigidity necessary for lifting heavy appliances, most trolleys of this nature are sturdy and cumbersome and thus take a large amount of space to store. For example, a conventional, sack truck is ideal for use in the delivery of domestic appliances such as washing machines but may take up too much storage space, for example in a small van, for a person with an occasional need to move such an appliance such as a landlord, handyman, flooring fitter, electrician or a plumber.

The present invention will be described in relation to its use with a domestic applicance such as a washing machine or a tumble dryer, the appliance comprising an inner cavity which is accessible through a hole of smaller dimension than the cavity. However, the invention could also be used perhaps with other domestic appliances comprising an inner cavity such as a refrigerator, a freezer or an oven.

It is common for domestic appliances such as washing machines to be floor-mounted and installed under a worktop. Usually the clearances between the top of the appliance and the worktop are small, perhaps up to 20mm, the smaller the clearance often being most appealing from an aesthetic point of view. However, such positions result in difficulties in installation and removal, particularly for a single person.

According to the present invention there is provided a trolley for moving domestic appliances which incorporate an inner cavity accessed through an opening, the trolley comprising:
an upstanding back section which has at a lower end one or more rotatable elements for engagement with a support surface and which has handle means towards an upper end;
a cavity engaging means which is mounted to the back section and which projects forwardly therefrom; and
a base engaging means which is mounted at the lower end of the back section below said drum engaging means and which provides a base engaging member projecting forwardly of the back section;
wherein the cavity engaging means includes a cavity engaging section, the position of which is variable in a vertical direction relative to the back section and in a horizontal direction towards and way from the back section and which cavity engaging section is securable in a chosen position relative to the back section.

Preferred features are set out in the attached dependent claims.

According to another aspect of the present invention there is also provided a method of using a trolley as herein described to move a domestic appliance.

The present specification also discloses a foldable trolley comprising a back member, lifting means located at the lower end of the back member and extending therefrom, rotatable elements located at the lower end of the back member and extending therefrom, handle means associated with the back member and means for engaging a domestic appliance connectable to the back member characterised in that the back member is foldable and in that at least one of the lifting means, the means for engaging a domestic appliance, the rotatable elements and the handle means can be folded to lie on or against the back member.

In some versions, both the lifting means, and the means for engaging a domestic appliance can be folded to lie on or against the back member. More preferably, each the lifting means, the means for engaging a domestic appliance, the rotatable elements and the handle means can be folded to lie on or against the back member.

The back member is may be foldable about one or more articulation points provided in or on the back member. The articulation points may be hinges or other joints. Optionally, the hinges or joints may be lockable in the open, closed or even in an in-between position. Examples of a lockable mechanism include using biasing means, such as springs or spring loaded mechanisms, mutually engageable lugs and notches or mating parts, using a ratchet mechanism, or a "click and lock" mechanism such as that employed on combination ladders.

The back member may comprise a frame of two or more upright sides connected to one another. Alternatively, in a preferred embodiment the back member comprises a single spine unit comprising two or more component parts.

Often, the back member may comprise two or more component parts connected to one another at the folding or articulation points.

The back member may be folded through more than 90° such that in the folded position the component parts lie against one another and are aligned in the open position. In one embodiment, the component parts of the back member may be offset from one another in the open position such that they can rotate through 180° to lie flat alongside one another in the closed position.

In some versions the back member comprises a single spine unit comprising two or more component parts connected to one another at the folding or articulation points and moveable through more than 90° such that in the folded position the component parts lie against one another and are aligned in the open position.

Alternatively one or more of the lifting means, the means for engaging a domestic appliance, the rotatable elements and the handle means are removable from the foldable back member.

The specification also discloses a demountable trolley comprising a back member, lifting means located at the lower end of the back member and extending therefrom, rotatable elements located at the lower end of the back member and extending therefrom, handle means associated with the back member and means for engaging a domestic appliance connectable to the back member characterised in that the back member comprises two or more sections demountable from one another and in that the lifting means, rotatable elements, the means for engaging a domestic appliance and the handle means are removable from the back member.

Where the back member is demountable, the pieces may be shaped such that they only fit together in the correct orientation.

Preferably, in the demountable embodiment, the pieces may have retaining members, such as retaining straps, such that a piece cannot be lost. For example, the pieces may be provided with retaining straps which are sufficiently flexible to permit movement between the assembled and disassembled positions. For example, each piece may be attached to a retaining strap at or near end of the pieces such that each retainer connects two pieces, or a single elastic member may be run centrally through all of the pieces. Alternatively, the pieces may comprise releasable retaining straps which are releasable from the piece and/or between pieces.

The rotatable elements, in use, facilitate movement of the trolley along the floor or the ground or some other support surface. The rotatable elements may be rollers or wheels, and may be attachable to or integral with the back member. The rotatable elements may extend in the opposite direction to the lifting means, although in some embodiments they may be positioned on, at, or close to the sides of the lifting means.

The lifting means are used to engage the underside of a domestic appliance and to lift it from the floor or other surface, such as a pallet, on which the appliance is located. The lifting means may have any suitable shape to engage with the underside of a domestic appliance and may comprise one or more arms, or, more preferably a plate or planar sheet of material. Where a plate or sheet of material is used the plate or sheet may be solid, contain cut-away portions or be perforated.

In some embodiments the back member of the trolley is able to be made smaller and/or more compact for storage while not in use, and in this respect the back member may be foldable, collapsible, telescopic, or demountable.

Preferably, the trolley is made from metal, especially tubular metal. The metal used will commonly be aluminium or steel. Where tubular metals are used it is preferred that the cross-section is round, oval or square.

In use, the means for engaging a domestic appliance engages with an internal surface or surfaces in the cavity of the domestic appliance; in a laundry machine such as a washing machine or tumble dryer this would be the upper portion of the inside of the drum towards the front opening of the appliance.

Ideally, the means for engaging a domestic appliance is shaped to match the surface of the appliance with which it engages in use. Thus, the means for engaging a domestic appliance is shaped to match the surface of the appliance with which it engages in use. For example, where the appliance is a laundry machine such as a washing machine or tumble dryer, the means for engaging a domestic appliance may be curved or comprises an arcuate profile.

In this aspect, the curved or arcuate portion may be shaped to fit one or both of the circumference of the laundry machine drum or to fit against the front of the housing and the ceiling of the drum.

The means for engaging a domestic appliance may be directly attached or attachable to the back member of the trolley. Preferably, the means for engaging a domestic appliance comprises an arm, one end of which is attached or attachable to the trolley. Advantageously, use of the arm allows for the distance between the back member and the means for engaging a domestic appliance, and the height of the arm, to be adjustable. In such an embodiment the appliance engaging means may be arranged transverse to the arm.

The present specification also discloses an appliance engaging arm for engaging a domestic appliance, the device being attachable to a trolley of the invention or a conventional trolley. The appliance engaging arm comprises trolley attachment means at one end and appliance engaging means at the other end which has a portion shaped to match the surface of the appliance with which it engages in use, such as the face of the inner cavity of the domestic appliance. Preferably, the length of the arm is adjustable, that is the length of the arm between the trolley attachment means and the appliance engaging means is adjustable, for example telescopic, and is able to be secured at a selected length or at least at both the extended and the closed lengths. Advantageously, this means that, in use, the user is able to attach the appliance engaging arm to the trolley at a chosen height above the ground, and to introduce the appliance engaging means to the face of the appliance and to adjust the distance therebetween such that a secure fit is achieved.

In all versions, the arm is secured at the selected length by securing means such as a locking pin, clamp means, ratchet means, or such like. In other embodiments the arm may be secured in place by friction. For example, the arm may comprise telescopic segments and one or each segment may be perforated such that, the length of the arm is secured by aligning the perforation holed in nested segments and inserting the locking pin through the aligned holes.

Alternatively, only the outer segment may contain one or more threaded holes and the arm is provided with a threaded locking pin, the rotation of which urges the one or more inner segments against the wall of the outer segment and thereby clamps the arm at the selected length.

In an alternative arrangement, the arm may comprise one or more telescopic rods and sleeves which have complementary screw-threads and thus the length can be adjusted by rotating the sleeve about the rod.

Preferably, the appliance engaging means are transverse to the arm. In any disclosed arrangements, the appliance engaging means preferably comprise a contact face which, in use, contacts the inner surface of the appliance. The contact face is preferably shaped such that it conforms to the inner surface of the appliance with which it contacts. The contact face may be provided with padding comprising a resilient material. The resilient material may be a foam, rubber, an elastomeric polymer or a synthetic rubber. The resilient material may be replaceable.

Alternatively, the contact face may be made from a resiliently deformable material which is able to conform to the inner surface of different appliances. For example, the contact face may be made of a resiliently deformable foam, such as a memory foam, a closed cell foam, a high density foam or such like, which will adaptably deform to take the shape of the area with which it makes contact in use.

Alternatively, the contact face may be shaped to fit a specific appliance or type of appliance. For example, when the appliance is a laundry machine having a rotatable drum, the contact face has at least a flat portion for engaging the flat roof portion of the drum, and an arcuate or curved portion for engaging the curve of the drum.

The contact face is preferably attached to the arm by a load-bearing support member.

The appliance engaging means may be integral with the arm.

In either aspect, the appliance engaging means may be made from metal.

Accordingly, the specification also discloses a laundry machine engaging arm, the arm comprising means for attaching the arm to a trolley and means for engaging the drum of a laundry machine in which the means for engaging the drum is curved or comprises an arcuate profile.

Aspects of the invention will now be described with reference to and as illustrated by the accompanying drawings in which
Figure 1 shows a perspective view of one embodiment of the invention where the back member comprises a single spine;
Figure 2 shows a perspective view similar to figure 1 and showing the axes of movement of the trolley components;
Figure 3 is an exploded view of the trolley of Figure 2;
Figure 4 is a close up view of the base engaging means of Figure 1;
Figure 5 is a perspective view of the trolley of Figure 1 engaged with a laundry appliance;
Figure 6 is a side view of the figure 5 arrangement;
Figure 7 is a detailed perspective view of a cavity engaging means of the trolley of Figure 1;
Figure 8 is a detailed perspective view from the front of a part of the cavity engaging means of figure 7;
Figure 9 is a detailed perspective view from the rear of a part of the cavity engaging means of figure 7;
Figure 10 is a perspective view of another embodiment of the present invention;
Figure 11 is a detailed perspective view of the rear of the base engaging means of the trolley of figure 10;
Figure 12 is a side view of a control member incorporated in the trolley of Figure 10;
Figure 13 is a close-up side view of the initial engagement of the trolley of Figure 10 with a domestic appliance;
Figure 14 is a close-up side view similar to Figure 13 but in a fully engaged position; and
Figure 15 is a schematic view illustrating the trolley in use.

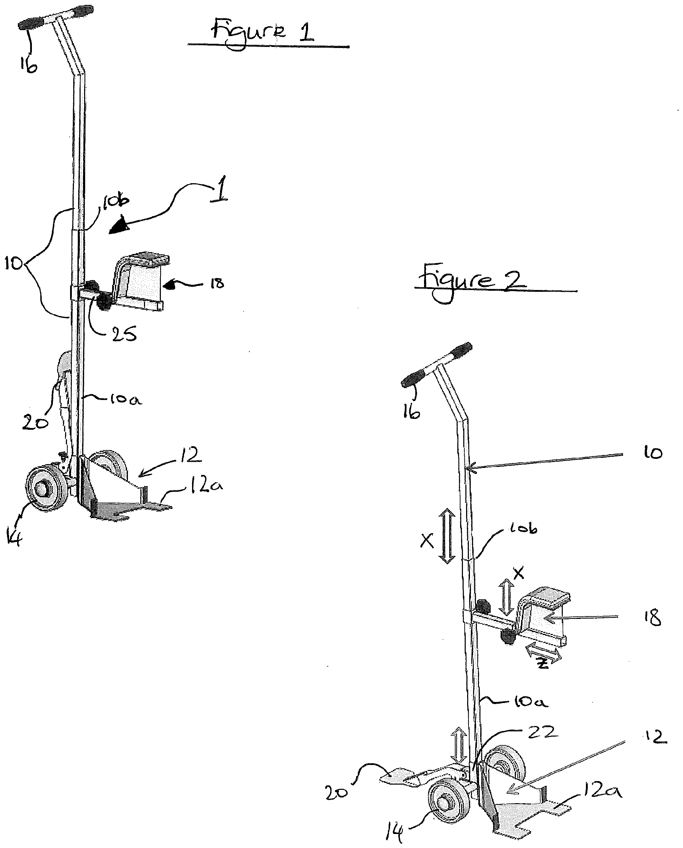

With reference to the drawings, there is shown a trolley 1 comprising a back section or member 10, lifting or base engaging means 12 located at a lower end 10a of the back member 10 and extending therefrom, rotatable elements 14 located at the lower end 10a of the back member 10 and extending laterally therefrom, handle means 16 associated with the back member 10 and means 18 for engaging a domestic appliance mounted to the back member 10. The back member 10 may be a single member or may be foldable or demountable at point 10b or telescopic such that the overall length/height may be adjustable vertically as shown by arrow X in Figure 2. Additionally, the base engaging means 12, in the form of a forwardly extending member or plate 12a in the embodiment shown, may be moveable vertically along the spine 11 of the back member 10 as shown by arrow Y in Figure 2.

As stated above, the back member 10 may (not shown) comprise hinges or other joints at point 10b in order to enable the back member 10 to fold or change length or otherwise disconnect to make the trolley 1 more compact when not in use. Any hinges or other joints would need to be lockable in an active position during use of the trolley. The back member may also comprise two or more telescopic portions, again lockable in active positions, such that the length of the back member 10 can be varied in the direction of arrow X in Figure 2.

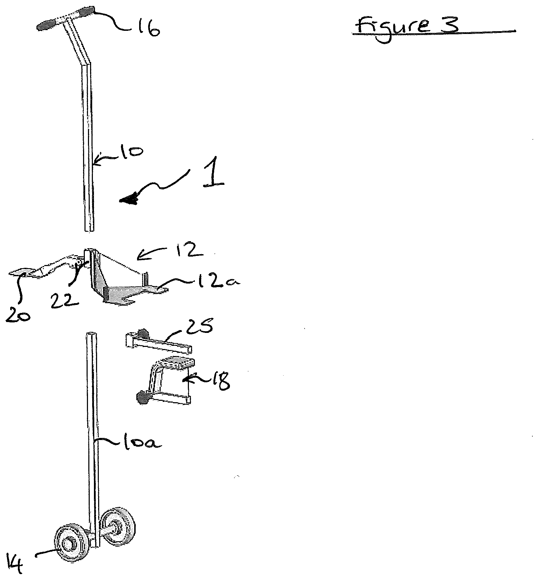

The base engaging means 12 includes a collar 22 which mounts to the spine 11 by sliding the collar 22 (Figure 3) over the spine 11 and lowering it down to the lower portion 10a of the back member 10. The plate 12a which is substantially flat in this embodiment extends forwardly from the collar 22.

In the embodiment shown, the rotatable elements 14 are wheels are attached via an axle 14a to the lower end of the back member 10, and extend in a transverse direction compared to the lifting plate 12a, which extends forwardly of the rotatable elements 14.

A kickstand 20 is also attached to the collar 22 and extends rearwardly to improve manoeuvrability of the trolley 1 in use lifting/moving an appliance. The kickstand 20 is optionally foldable relative to the collar 22 by means of a hinge 20a to make the trolley more compact when not in use and may be securable in its extended position.

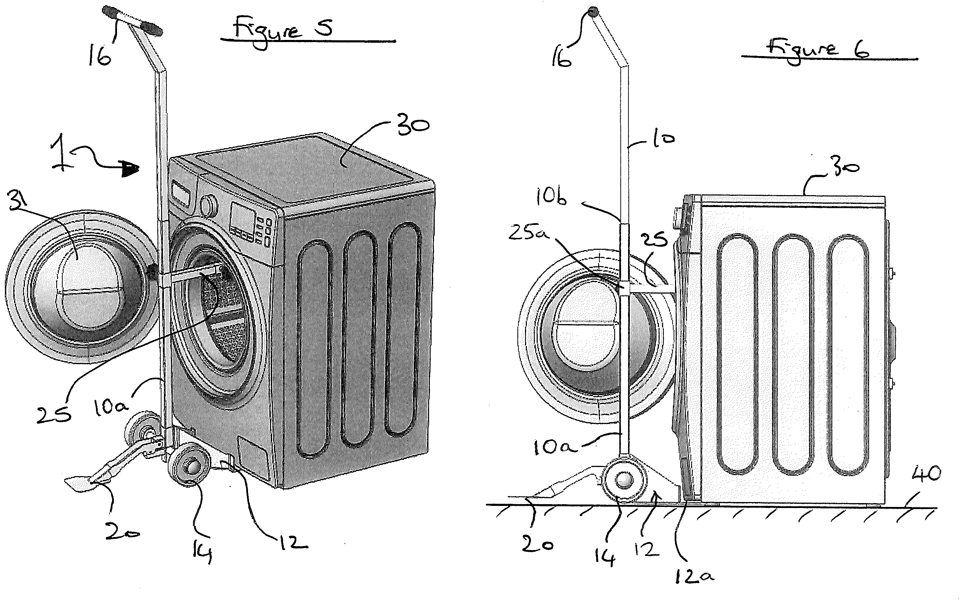

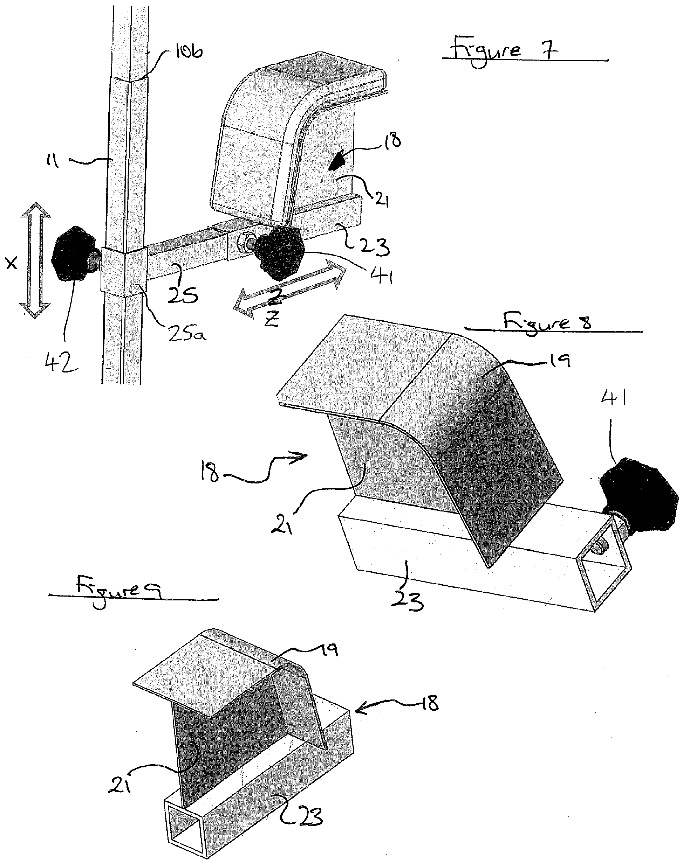

In use, the base engaging means 12, are used to engage the underside of a domestic appliance 30 (the appliance often has a structural frame member along the front of the appliance hidden by a front fascia panel of the appliance) and to lift it from the floor or other surface, such as a pallet, on which the appliance 30 is located. The base engaging means 12 may comprise additional walls or panels 29 to improve strength and may have short upstanding back plates 28 ideally faced with rubber or other resilient material to prevent scratching of the appliance 30 in use. The plate 12a may be similarly faced on its upper surface.The means 18 for engaging a domestic appliance is shaped to match the surface of the appliance with which it engages in use. Thus, as shown in the drawings, especially Figures 8 and 9, the means 18 for engaging a domestic appliance is shaped to match the an internal surface of the inside of the drum of laundry machine such as a washing machine or tumble dryer, and thus comprises a curved or arcuate profile. In Figures 8 and 9, the curved or arcuate portion 19 is shaped to fit against the front of the housing and the ceiling of the drum, as shown in Figures 5 and 6.

Referring to Figures 7, 8 and 9, the means 18 for engaging a domestic appliance include a curved plate 19, supported by a support plate 21, the plates 19 and 21 being attached to an arm sleeve 23 which is slidably mounted on an arm 25 having an end collar 25a in which the spine 11 is received. The distance between the spine 11 of the back member and the means 18 can be adjusted along the generally horizontal axis shown by arrow Z in Figures 2 and 7. In the embodiment shown, the arm sleeve 23 is secured in place on the arm 25 using a screw member 41. Optionally, as shown in Figure 7 a resilient pad is placed on the curved plate 19 to prevent scratching of the appliance 30. The end sleeve 25a of the arm 25 is movable along the spine 11 so as to adjust the generally vertical position of the means 18 relative to the base engaging means 12 as indicated by the arrow X in figure 7. The position of the end collar 25a can be secured by means of a screw member 42. Other methods of adjusting the position of the means 18 relative to the back member 12 are however envisaged.

In use, the trolley 1 is manoeuvered relative to the appliance 30 such that the forwardly extending plate 12a moves below the appliance 30, the space between the ground or support surface 40 and the appliance being small, often of the order of 20mm. The back plates 28 may engage the appliance 30 to prevent further inward movement but not necessarily. As can be seen in Figures 5 and 6, the means 18 for engaging the domestic appliance 30 enter the cavity of the appliance during this manoeuvering to be engaged with an internal surface such as the upper portion of the inside of the drum of the domestic appliance 30. The kickstand 20 can be utilised in this manoeuvring step.

With the plate 12a positioned below the appliance and the cavity engaging means 18 disposed within the drum of the appliance 30 through the door 31, the user may adjust the cavity engaging means 18 along the arm 25 (arrow Z) and along the spine 11 (arrow X) until the plate 19 engages the drum of the machine. The trolley 1 is then inclined rearwardly a small amount by pulling back on the handle means 16, and/or applying downward foot pressure on the kickstand 20 to aid control, such that the lifting means 12 lift the appliance 30 sufficiently from the ground 40 and the trolley 1 is wheeled backwards with the means 18 gripping the inside cavity of the appliance to ensure that it moves in the desired direction. The lifting action required is small and indeed is often necessarily small in view of the proximity of the appliance to a worktop below which the appliance may be installed. The adjustability of the drum engaging means 18 in both the X and Z directions, i.e. up or down and towards or away from the spine 11 of the back member 10, enables the trolley to engage the cavity/drum of the appliance 30 accurately and securely during lifting and subsequent movement of the appliance 30 into or out of its chosen position.

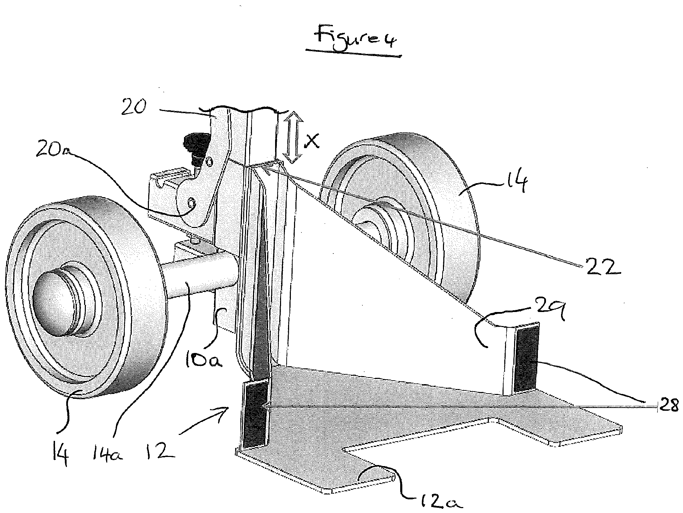

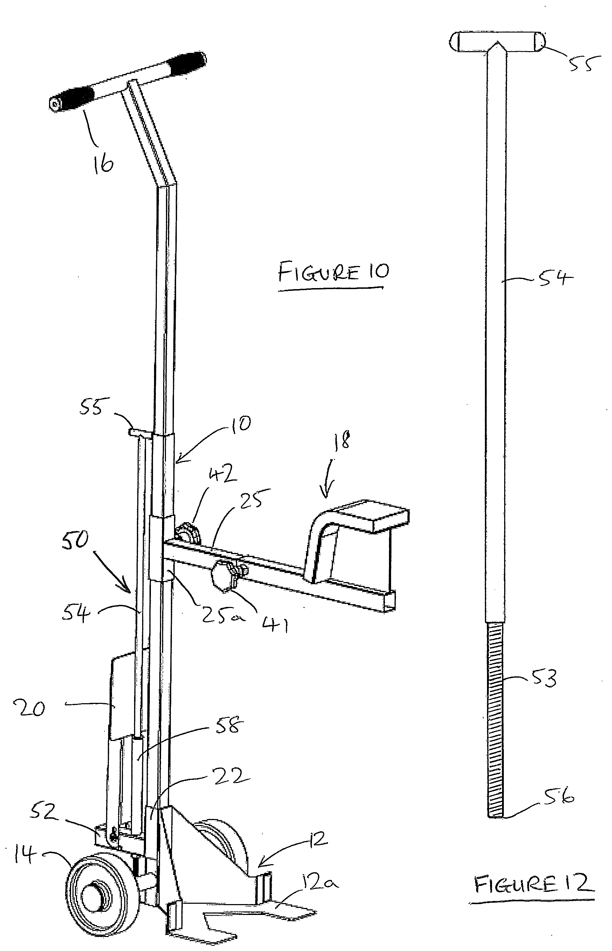

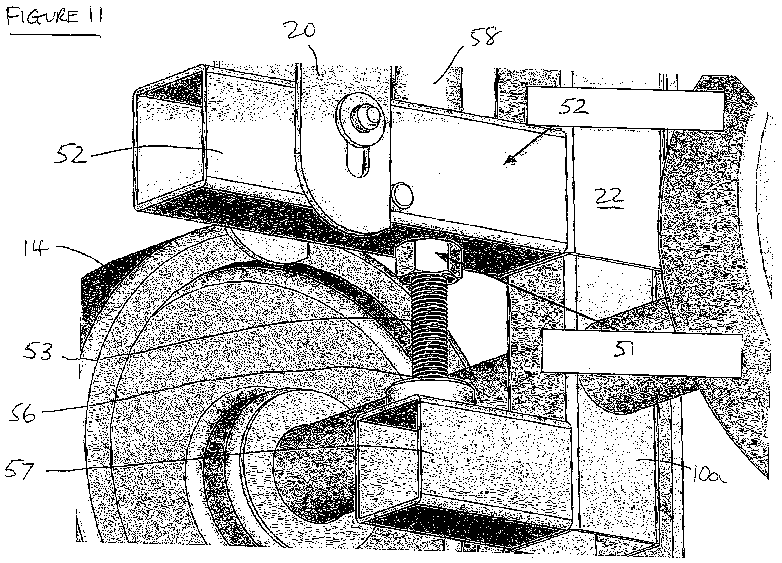

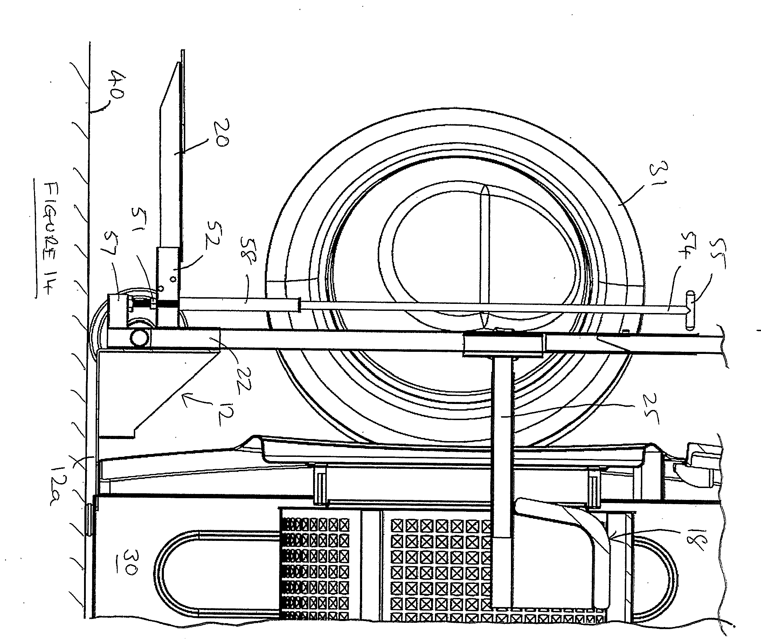

In the embodiment shown in figures 10 to 14, most features correspond to the embodiment shown in figures 1 to 9 and so like elements have been given the same reference numerals. The arrangement of figures 10 to 14 illustrate in detail an additional feature relating to the base engaging means 12. In this embodiment there is provided a control mechanism 50 for adjusting the vertical position of the base engaging means 12 on the spine 11 of the back member 10. The collar 22 of the base engaging means 12 can slide down the spine 11 until it is at a lowermost position and, ordinarily, in this lowermost position the plane of the lifting plate 12a will be generally at ground level, i.e. the lowermost level of the wheels 14 or rotatable elements, and extend forwardly of the wheels 14. In such a lowermost position, it is easiest for the plate 12a to be inserted below the appliance 30 prior to moving the appliance.

In the control mechanism 50, the collar 22 is provided with a threaded member such as a nut 51 which in this embodiment is secured to a rearward extension 52 of the collar 22 and which is aligned with a hole through the extension 52. Extending through the hole and through the nut 51 is the lower threaded end 53 of an elongate control bar 54. At the upper end of control bar is a control handle 55 which is preferably provided at a convenient height for the user of the trolley 1. turning the control handle 55 will enable more or less of the lower end of the control bar 54 to project below the collar extension 52. The lowermost end 56 of the control bar 54 engages a rearward projection 57 secured to the spine 11/back member 10 such that turning the control bar 54 in a direction to cause more of the bar 54 to project downwardly from the collar extension will urge the collar 22, and hence the base engaging means 12 and plate 12a, to move upwardly relative to the ground/wheels 14. A short tube 58 may also be provided on the rearward extension 52 in order to improve stability of the control bar 54.

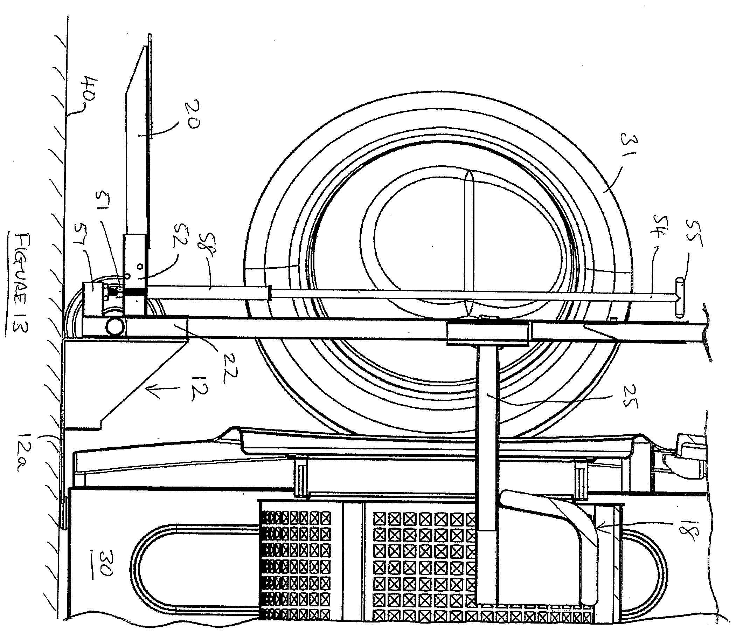

In use of the trolley, therefore, the control bar 54 is turned such that the collar 22 is able to take up a lower position. The trolley can then be manoeuvred such that the plate 12a of the base engaging means 12 is positioned below the appliance 30 as shown in figure 13. In this position, the plate 12a is somewhat spaced from the underside of the appliance 30 and the drum engaging means 18 is extending into the drum of the appliance 30. The drum engaging means 18 can then be correctly positioned in a drum engaging position, as discussed above, by moving the curved plate 19/arm sleeve 23 in the X and/or Z directions.

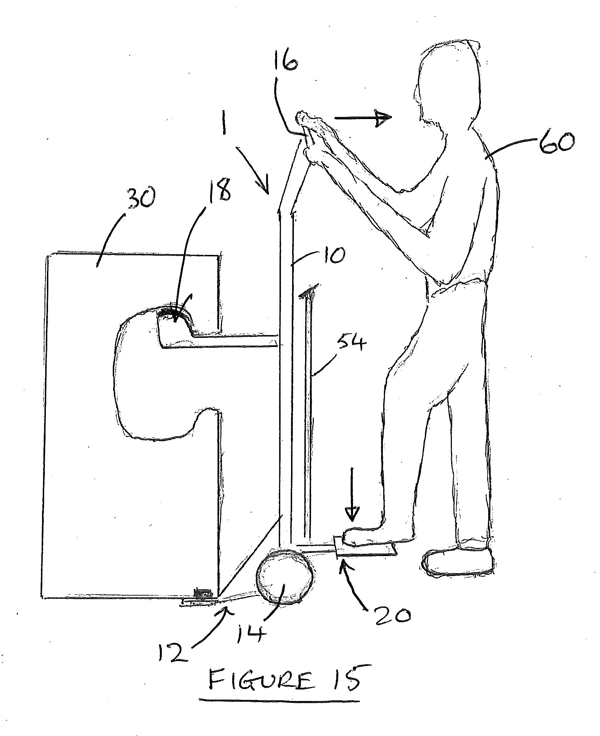

The control bar 54 can then be turned in such a direction to move the collar 22 upwards, thereby causing the plate 12a to engage tightly the underside of the appliance 30. The appliance 30 is thus more securely positioned/held with respect to the trolley 1 and can then be lifted slightly and moved as previously discussed by manipulating the handle 16 and also applying a downward force on the kickstand 20. The rearward pulling of the handle 16 and/or downward pressure on the kickstand 20 act as leverage to cause the plate 12a to pivot upwardly about the axle 14a in a direction to lift the appliance. In this way, the appliance can be lifted just clear of the floor to enable the trolley/appliance combination to be moved rearwardly with minimal tilting of the appliance, this being particularly beneficial when the appliance is installed just below a worktop. Figure 15 is a schematic illustration of a person 60 using the trolley 1 and shows in arrow form the rearward pulling of the handle 16 and the downward force being applied by the person's foot to the kickstand 20.

It will be appreciated that other methods of raising the base engaging means 12 and holding it in a raised position are possible, the threaded bar/nut option described above being one example. Other examples could include lever mechanisms associated with downward pressure on the kickstand 20. Also, the kickstand 20 could be attached, and extend rearwardly from, the fixed rearward projection or the back member 10 instead of from the collar 22.

It is also envisaged that the rotatable elements/wheels 14 could be driven by an electric motor or other drive means mounted on the trolley with suitable controls to facillitate the movement of the trolley, particularly when engaged with an appliance 30. The motor could be powered by an on-board battery or by connection to an external power source.

## Claims

1. A trolley for moving domestic appliances which incorporate an inner cavity accessed through an opening, the trolley comprising:
an upstanding back section which has at a lower end one or more rotatable elements for engagement with a support surface and which has handle means towards an upper end;
a cavity engaging means which is mounted to the back section and which projects forwardly therefrom; and
a base engaging means which is mounted at the lower end of the back section below said drum engaging means and which provides a base engaging member projecting forwardly of the back section and the rotatable elements;
wherein the cavity engaging means includes a cavity engaging section, the position of which is variable in a vertical direction relative to the back section and in a horizontal direction towards and way from the back section and which cavity engaging section is securable in a chosen position relative to the back section.

2. A trolley as claimed in claim 1 wherein the cavity engaging means further comprises a support arm on which is mounted the cavity engaging section, the support arm being movably mounted on the back section to effect the variable vertical positioning of the cavity engaging means.

3. A trolley as claimed in claim 2 wherein the cavity engaging section slidably mounted on the support arm and is securable either (i) in any one of a number of predetermined positions along the support arm to effect the variable horizontal positioning of the cavity engaging means, or (ii) in any chosen position along the support arm to effect the variable horizontal positioning of the cavity engaging means, for example using a locking screw member.

4. A trolley as claimed in claim 2 or 3 wherein the support arm is securable either (i) in any one of a number of predetermined positions along the back section, or (ii) in any chosen position along the support arm, for example using a locking screw member.

5. A trolley as claimed in any one of claims 2 to 4 wherein the support arm has a sleeve at one end in which sleeve the back section is slidably received.

6. A trolley as claimed in any one of claims 1 to 5 wherein the base engaging means is movable in a vertical direction relative to the back section and the one or more rotatable elements.

7. A trolley as claimed in claim 6 wherein, in the lowermost position of the base engaging means, the base engaging member is substantially at the lowermost level of the one or more rotatable elements.

8. A trolley as claimed in claim 7 wherein the base engaging means is movable upwards from its lowermost position to a position nearer the cavity engaging means and is retainable in said raised position such that, in use, the base engaging member engages the underside of the domestic appliance.

9. A trolley as claimed in claim 8 wherein the movement of the base engaging means is effected by means of a screw element extending through a threaded portion of the base engaging means, the lower end of the screw element engaging a fixed portion of the back section and the upper end preferably having a handle to effect turning of the screw element.

10. A trolley as claimed in claim 9 wherein said fixed portion is a rearward projection from the back section.

11. A trolley as claimed in any one of claims 1 to 10 wherein the base engaging means provides a rearwardly extending kickstand which projects in an opposite direction to the base engaging member, the kickstand preferably being hingably movable between a stowed position substantially aligned with the back section and an active position in which it projects in said opposite direction to the base engaging member.

12. A trolley as claimed in any one of claims 1 to 11 wherein the base engaging member comprises a substantially flat base plate projecting forwardly of the one or more rotatable elements, the base plate having one or more upstanding back plate just forward of the one or more rotatable elements.

13. A trolley as claimed in any one of claims 1 to 12 wherein the back section either (i) comprises a single spine member, or (ii) is telescopic such that its height is variable and lockable at a chosen height, or (iii) is foldable about one or more hinges.

14. A trolley as claimed in any one of claims 1 to 13 wherein at least portions of the base engaging means and the cavity engaging means are contoured for engagement with the domestic appliance and preferably incorporate resilient buffers for protecting the domestic appliance.

15. A trolley as claimed in any one of claims 1 to 14 wherein said one or more rotatable elements comprise a pair of wheels mounted on opposite sides of the back section, the axis of rotation passing through the back section.
